**Europäisches Patentamt**

**European Patent Office**

**Office européen des brevets**

(19)

(11) Veröffentlichungsnummer: **0 112 973**
**B1**

(12) # EUROPÄISCHE PATENTSCHRIFT

(45) Veröffentlichungstag der Patentschrift:
**01.07.87**

(51) Int. Cl.⁴: **C 02 F 1/72, C 02 F 1/74**

(21) Anmeldenummer: **83109611.0**

(22) Anmeldetag: **27.09.83**

(54) **Vorrichtung zur Abwasserreinigung.**

(30) Priorität: **04.12.82 DE 3244963**

(43) Veröffentlichungstag der Anmeldung:
**11.07.84 Patentblatt 84/28**

(45) Bekanntmachung des Hinweises auf die Patenterteilung:
**01.07.87 Patentblatt 87/27**

(84) Benannte Vertragsstaaten:
**AT BE CH FR GB IT LI NL SE**

(56) Entgegenhaltungen:
**AT-A-352 032**
**GB-A-316 795**
**US-A-3 790 141**
**US-A-4 190 543**

(73) Patentinhaber: **Fried. Krupp Gesellschaft mit beschränkter Haftung, Altendorfer Strasse 103, D-4300 Essen 1 (DE)**

(72) Erfinder: **Wettengl, Dietmar, Robertsstrasse 24, D-5000 Köln 50 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 112 973 B1

## Beschreibung

Die Erfindung betrifft eine Vorrichtung zur Reinigung von Abwasser durch Oxidation der Abwasserinhaltstoffe mit sauerstoffhaltigen Gasen oder Sauerstoff in Gegenwart fester Katalysatorteilchen bei Normaldruck und Umgebungstemperatur in einem rechteckigen oder quadratischen nach oben geöffneten und nach unten mit einem beidseitig zur Beckenmitte geneigten Boden versehenen Reaktionsbecken mit einer Zulaufeinrichtung für das Abwasser an einer Stirnwand, einer Ablaufeinrichtung für das Reinwasser an der gegenüberliegenden Stirnwand und mehrere, das Reaktionsbecken in Kammern unterteilende Trennwände, wobei innerhalb der Kammern jeweils ein mit Querwänden versehener Steigkanal vorgesehen ist, der mit Abstand oberhalb des Bodengrundes beginnt, unterhalb des obigen Flüssigkeitsspiegels endet und daß unterhalb der Steigkanäle eine Belüftungseinrichtung vorgesehen ist, nach EP-A 69 220.

Mit dem Gegenstand nach EP-A 69 220 wird das Wasser-Kontaktmasse-Luft-Gemisch vom Boden zur Wasseroberfläche gefördert, wobei die Strömung gleichmäßig gerichtet ist. Der Ausgleich der Kontaktmasse erfolgt selbsttätig von Kammer zu Kammer. Ein Teil der Kontaktmasse setzt sich im Trichter ab. Im Bereich der Steigkanäle stellt sich eine vertikale Strömung und im Bereich des Reaktionsbeckens stellt sich aufgrund der Zuflußmenge an Abwasser eine horizontale Strömung ein.

Beim Gegenstand nach EP-A 69 220 hat sich bei der Durchströmung des Katalysator-Wassergemisches gezeigt, daß im Laufe der Zeit die Katalysatorteilchen in Flußrichtung getragen werden, das heißt, die Katalysatorteilchen werden von der Abwassereintrittsseite zur Reinwasseraustrittsseite verschleppt.

Der Erfindung liegt die Aufgabe zugrunde, eine Vorrichtung zur Durchführung der katalytischen oxidativen Abwasserreinigung zu schaffen, die zur Erzeugung des Katalysator-Wirbelbettes und der Abwasserströmung möglichst wenig Energie bzw. Luft benötigt und in der die Zerstörung der Katalysatorteilchen durch Abrieb stark eingeschränkt ist, und daß weiterhin ein Verschleppen der Katalysatorteilchen vermieden wird.

Diese Aufgabe wird dadurch gelöst, daß die Trennwände geschlossene Kammern bilden, die mit den Steigkanälen parallel zur Strömungsrichtung des Abwassers verlaufen und jede Kammer eine gesonderte Zulaufeinrichtung für das Abwasser und eine gesonderte Ablaufeinrichtung für das Reinwasser aufweist.

Aufgrund der längsverlaufenden Steigkanäle mit den schräg gestellten Querwänden bzw. den verstellbaren Pendelklappen am Kopf der Querwände wird ein Rücktransport der Katalysatorteilchen bewirkt, weil hierdurch eine resultierende Transportgeschwindigkeit in der Vertikalen erzeugt wird. Damit wird der Massenstrom innerhalb der einzelnen Kammern geregelt. Die erfindungsgemäße Maßnahme bewirkt eine gleichmäßige Verteilung der Katalysatorteilchen innerhalb der Kammern des Reaktionsbeckens und damit eine Optimierung der Wasserreinigung.

Weitere Ausgestaltungen der Erfindung sind in den Unteransprüchen gekennzeichnet.

Ein Ausführungsbeispiel der Erfindung ist in der Zeichnung dargestellt und wird im Nachfolgenden näher beschrieben. Es zeigt:

Fig. 1 einen Längsschnitt,

Fig. 2 einen Querschnitt gemäß Linie A-B in Fig. 1,

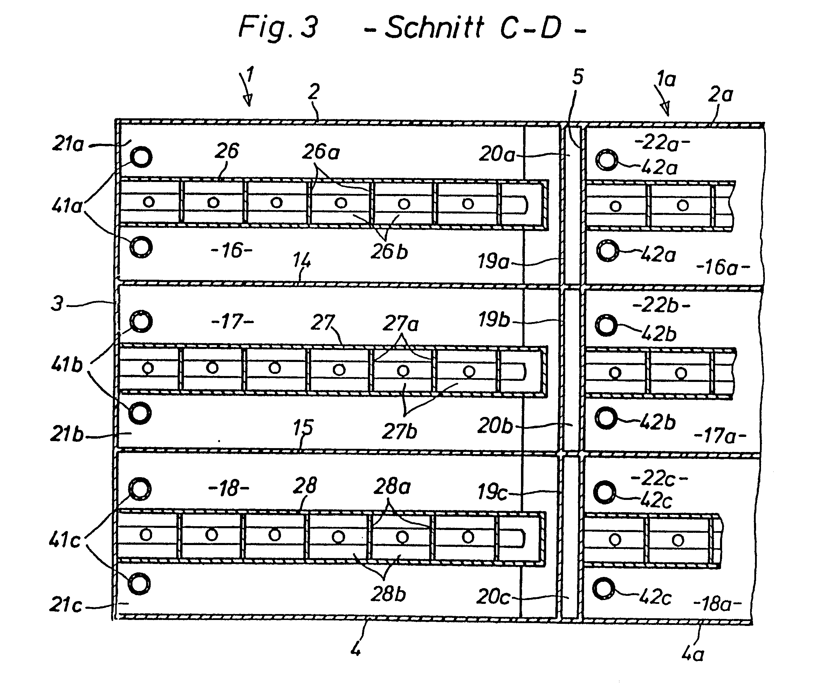

Fig. 3 einen Querschnitt gemäß Linie C-D in Fig. 1.

Im Ausführungsbeispiel ist das Reaktionsbecken 1 durch die beiden Behälterseitenwände 2 und 4 und die beiden Stirnwände 3 und 5 gebildet. Trennwände 14 und 15 bilden einzelne Behandlungskammern 16, 17 und 18. Unterhalb jeder dieser Kammern ist ein Boden 6, 7 und 8 vorgesehen, wobei jeder dieser Böden durch geneigte Bodenteile 6a, 6b bzw. 7a, 7b oder 8a bzw. 8b, gebildet ist. Die Bodenteile 6 bis 7 sind an den Stellen 12 und 13 miteinander verbunden.

Oberhalb der Verbindungen 12 und 13 befinden sich die Trennwände 14 und 15. Innerhalb der Kammern 16 bis 18 sind Leitwände 19a, 19b und 19c mit Abstand vor der Stirnwand 5 angeordnet, die gemeinsam Austrittskanäle 20a, 20b und 20c mit einem unteren Eintrittsspalt 40 bilden. Die Wände 19a, 19b und 19c bilden Teile der Ablaufeinrichtungen 22a, 22b und 22c für das Reinwasser. Die Stirnwand 4 ist mit Zulaufeinrichtungen 21a, 21b und 21c für das Abwasser versehen. Die Zu- und Ablaufeinrichtungen 21 und 22 sind derart angeordnet, daß sich innerhalb der Kammern 16 bis 18 gleichmäßig hohe Wasserspiegel 23, 24 und 25 einstellen. Fernerhin ist jede Kammer 16 bis 18 mit einem Steigkanal 26, 27 und 28 versehen, die mit Abstand oberhalb der tiefsten Bodenstellen 9, 10 und 11 beginnen und im oberen Bereich unterhalb der Wasserspiegel 23 bis 25 enden. Die Kanäle 26 bis 28 sind durch Trennwände 26a, 27a und 28a in einzelne Kammern 26b, 27b bzw. 28b unterteilt. Unterhalb der Steigkanäle 26 bis 28 befinden sich Belüftungsrohre 35, 36 und 37 mit düsenförmigen Öffnungen 35a, 36a und 37a, die so angeordnet sind, daß jeder Kammer 26, 27 oder 28 eine oder mehrere der Düsen 35a, 36a oder 37a zugeordnet sind. Die Belüftungsrohre 35 bis 37 werden über Zulaufleitungen 29 bis 31 durch Gebläse 32 bis 34 beaufschlagt.

Das Abwasser wird über die Zulaufeinrichtungen 21a, 21b und 21c gleichmäßig auf die Kammern 16 bis 18 verteilt. Mit der aus den Düsen 35a, 36a und 37a austretenden Luft wird das Abwasser innerhalb der Steigkanäle 26 bis 28 nach oben geführt, tritt aus diesen aus und fällt wiederum nach unten ab. Dieser Vorgang wiederholt sich so lange, bis die Abwasserteilchen über die Austrittsöffnungen 40 in die Austrittskanäle 20 einströmen und von dort in die Ablaufeinrichtungen 22a, 22b und 22c gelangen. Hier verläßt das gereinigte Wasser das Reaktionsbecken 1 oder gelangt über Zulaufrohre 42a bis 42c in ein nachfolgendes Reaktionsbecken 1a, das genau so aufgebaut ist wie das Reaktionsbecken 1, jedoch mit der Maßgabe, daß die Auslaufeinrichtungen 22a, 22b und 22c gleichzeitig Einlaufeinrichtungen für das Reaktionsbecken 1a darstellen. Diesen Einlaufeinrichtungen sind die Zulaufrohre 42a, 42b und 42c zugeordnet. Aufgrund der zuvor geschilderten Maßnahme ist das Reaktionsbecken 1a gegenüber dem Becken 1 geringfügig tiefer gesetzt.

Damit sich innerhalb der Kammern 16 bis 18 keine Katalysatorteilchen ansammeln, sind die Querwände 26a, 27a und 28a innerhalb der Kammern 26b, 27b und 28b in ihrem oberen Bereich mit Pendelklappen 38 versehen, die jeweils in einem Gelenk 39 schwenkbar gelagert sind. Mit dieser Maßnahme wird eine Rückströmung des Katalysator-Wassergemisches erreicht und gleichzeitig ein Ansammeln von Katalysatorteilchen an unkontrollierten Stellen verhindert.

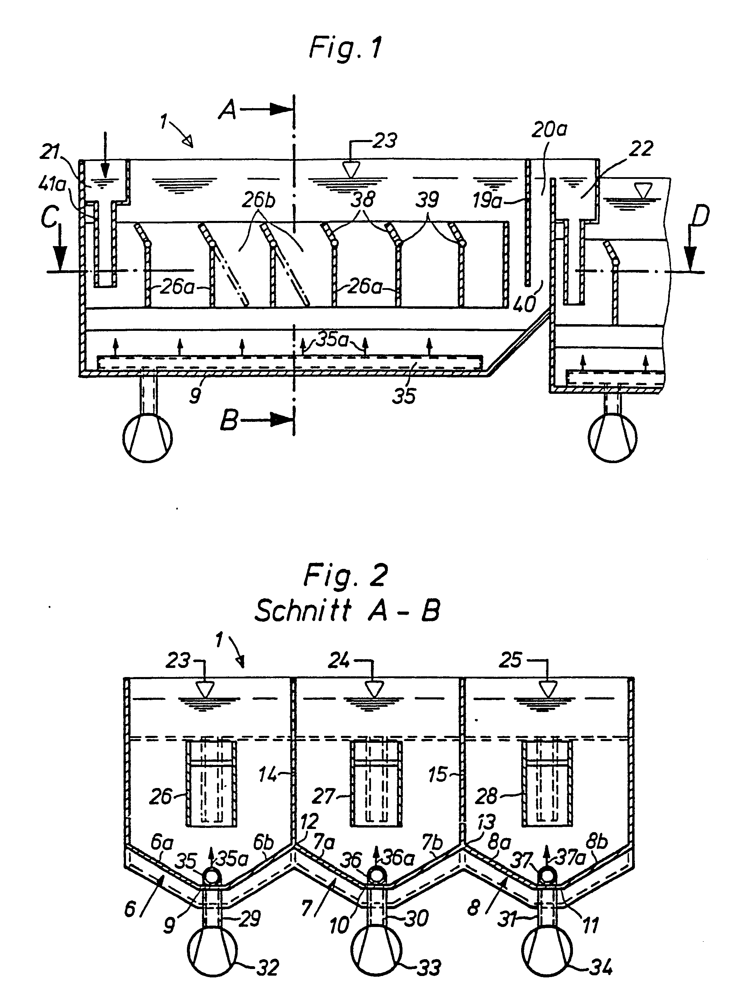

Anstelle der Pendelklappen 38 können auch die gesamten Querwände 26a - 28a entgegen der Strömungsrichtung des Wassers schräg gestellt sein, wie in Figur 1 strichpunktiert dargestellt ist.

## Patentansprüche

1. Vorrichtung zur Reinigung von Abwasser durch Oxidation der Abwasserinhaltsstoffe mit sauerstoffhaltigen Gasen oder Sauerstoff in Gegenwart fester Katalysatorteilchen bei Normaldruck und Umgebungstemperatur in einem rechteckigen oder quadratischen nach oben geöffneten und nach unten mit einem beidseitig zur Beckenmitte geneigten Boden versehenen Reaktionsbecken mit einer Zulaufeinrichtung für das Abwasser an einer Stirnwand, eine Ablaufeinrichtung für das Reinwasser an der gegenüberliegenden Stirnwand und mehrere das Reaktionsbecken in Kammern unterteilende Trennwände, wobei innerhalb der Kammern jeweils ein mit Querwänden versehener Steigkanal vorgesehen ist, der mit Abstand oberhalb des Bodengrundes beginnt, unterhalb des obigen Flüssigkeitsspiegels endet und daß unterhalb der Steigkanäle jeweils eine Belüftungseinrichtung vorgesehen ist, dadurch gekennzeichnet, daß die Trennwände (14, 15) geschlossene Kammern (16, 17, 18) bilden, die mit den Steigkanälen (26, 27, 28) parallel zur Strömungsrichtung des Abwassers verlaufen und jede Kammer (16 bis 18) eine gesonderte Zulaufeinrichtung (21a, 21b, 21c) für das Abwasser und eine gesonderte Ablaufeinrichtung (22a, 22b, 22c) für das Reinwasser aufweist.

2. Vorrichtung nach Anspruch 1, dadurch gekennzeichnet, daß innerhalb der Steigkanäle (26 bis 28) Kammern (26b, 27b, 28b) vorgesehen sind, die aus Querwänden (26a, 27a, 28a) gebildet sind, die entgegen der Strömungsrichtung des Wassers schräg gestellt sind.

3. Vorrichtung nach Anspruch 1, dadurch gekennzeichnet, daß die in den Steigkanälen (26 bis 28) angeordneten Querwände (26a, 27a, 28a) in ihrem oberen Teil als Pendelklappe (38) ausgebildet sind.

4. Vorrichtung nach Anspruch 3, dadurch gekennzeichnet, daß die Pendelklappen (38) entgegen der Fließrichtung des Wassers geneigt sind.

5. Vorrichtung nach den Ansprüchen 1 bis 4, dadurch gekennzeichnet, daß den Kammern (16 bis 18), in Fließrichtung des Wassers gesehen, jeweils eine oder mehrere Kammern (16a, 17a, 18a) nachgeschaltet sind, wobei die Auslaufeinrichtung der Vorkammern (16, 17, 18) gleichzeitig Zulaufeinrichtung (22a, 22b, 22c) für die Nachkammern (16a, 17a, 18a) ist und damit die Nachkammern gegenüber den Vorkammern tiefer liegen.

6. Vorrichtung nach den Ansprüchen 1 bis 5, dadurch gekennzeichnet, daß jeder Zulaufeinrichtung (22) ein oder mehrere Zulaufrohre (41) zugeordnet sind, die bis in die mittlere Höhe der Steigkanäle (26 bis 28) reichen.

## Revendications

1. Dispositif d'épuration des eaux usées par oxydation des substances contenues dans les eaux usées par des gaz contenant de l'oxygène ou par de l'oxygène en présence de particules solides du catalyseur sous une pression normale et à la température ambiante, dans un bac de réaction rectangulaire ou carré, ouvert à sa partie supérieure et muni, à sa partie inférieure, d'un fond incliné des deux côtés dans la direction du milieu du bac, avec un dispositif d'amenée des eaux usées situé dans une paroi frontale, un dispositif d'évacuation de l'eau purifiée situé dans la paroi frontale opposée, et plusieurs parois de séparation qui subdivisent en chambres le bac de réaction, chaque chambre comprenant un conduit d'ascension muni de parois transversales, qui commence à une certaine distance au-dessus du fond et se termine au-dessous de la surface supérieure du liquide, et un dispositif d'aération, caractérisé en ce que les parois de séparation (14, 15) délimitent des chambres fermées (16, 17, 18) qui, avec les conduits d'ascension (26, 27, 28), sont parallèles à la direction d'écoulement des eaux usées, et en ce que chaque chambre (16 à 18) comporte un dispositif d'amenée à part (21a, 21b, 21c) des eaux usées et un dispositif d'évacuation à part (22a, 22b, 22c) de l'eau épurée.

2. Dispositif selon la revendication 1, caractérisé en ce que l'intérieur des conduits d'ascension (26 à 28) comporte des chambres (26b, 27b, 28b) qui sont formées par des parois transversales (26a, 27a, 28a) qui sont orientées obliquement par rapport à la direction d'écoulement de l'eau.

3. Dispositif selon la revendication 1, caractérisé en ce que les parois transversales (26a, 27a, 28a) placées dans les conduits d'ascension (26 à 28) ont, dans leur partie supérieure, la forme d'un capuchon pendulaire (38).

4. Dispositif selon la revendication 3, caractérisé en ce que les capuchons pendulaires (38) sont inclinés par rapport à la direction d'écoulement de l'eau.

5. Dispositif selon les revendications 1 à 4, caractérisé en ce que les chambres (16 à 18) sont suivies, dans le sens de l'écoulement de l'eau, d'une ou plusieurs chambres (16a, 17a, 18a), la conduite d'évacuation des chambres d'amont (16, 17, 18) constituant en même temps, dans ce cas, le dispositif d'amenéé (22a, 22b, 22c) aux chambres d'aval (16a, 17a, 18a), et les chambres d'aval étant situées plus bas que les chambres d'amont.

6. Dispositif selon les revendications 1 à 4, caractérisé en ce qu'à chaque dispositif d'amenée (22) correspondent un ou plusieurs tubes d'amenée (41), qui vont jusqu'à mi-hauteur des conduits d'ascension (26 à 28).

## Claims

1. An apparatus for purifying sewage by oxidizing its contents with oxygen-containing gases or oxygen in the presence of solid catalyst particles at normal pressure and ambient temperature in a rectangular or square reaction basin which is open at the top and has at its base a bottom inclined on both sides in the direction of the basin centre, the reaction basin having at one end wall a supply device for the sewage, at the opposite end wall a discharge device for the clean water, and a number of partitions subdividing the reaction basin into chambers, and provided inside each of the chambers is an uptake which has transverse walls and starts at a distance above the bottom of the basin and terminates below the top level of the liquid, an aerating device being provided beneath each of the uptakes, characterized in thst the partitions (14, 15) form closed chambers (16, 17, 18) which extend with the uptakes (26, 27, 28) parallel with the direction of flow of the sewage, each chamber (16 to 18) having a separate supply device (21a, 21b, 21c) for the sewage and a separate discharge device (22a, 22b, 22c) for the clean water.

2. An apparatus according to Claim 1, characterized in that disposed inside the uptakes (26 to 28) are chambers (26b, 27b, 28b) formed by transverse walls (26a, 27a, 28a) which are positioned at an inclination contrary to the direction of flow of the water.

3. An apparatus according to Claim 1, characterized in that the upper portion of the transverse walls (26a, 27a, 28a) disposed in the uptakes (26 to 28) is constructed in the form of a pendulum-type valve (38).

4. An apparatus according to Claim 3, characterized in that the pendulum-type valves (38) are inclined contrary to the direction of flow of the water.

5. An apparatus according to Claims 1 to 4, characterized in that the chambers (16 to 18) are each followed by one or more chambers (16a, 17a, 18a), viewed in the direction of flow of the water, the discharge device of the preceding chambers (16, 17, 18) at the same time forming the supply device (22a, 22b, 22c) for the following chambers (16a, 17a, 18a), so that the following chambers are disposed at a lower level than the preceding chambers.

6. An apparatus according to Claims 1 to 5, characterized in that associated with each supply device (22) is one or more supply pipes (41) which extend as far as the centre of the height of the uptakes (26 to 28).

## Fig. 1

## Fig. 2
## Schnitt A - B

Fig.3   – Schnitt C-D –

0112973